# EUROPEAN PATENT SPECIFICATION

(11) **EP 3 911 621 B1**
(45) Date of publication and mention of the grant of the patent: **02.12.2026**
(21) Application number: 20740871.7
(22) Date of filing: 17.01.2020
(51) Int. Cl.: C05G 5/30, C05G 5/12, C05G 1/00, C05G 3/70

(54) **HYDROPHOBIC COATINGS TO IMPROVE THE PHYSICAL QUALITY PARAMETERS OF FERTILIZERS**
HYDROPHOBE BESCHICHTUNGEN ZUR VERBESSERUNG DER PHYSIKALISCHEN QUALITÄTSPARAMETER VON DÜNGEMITTELN
REVÊTEMENTS HYDROPHOBES POUR AMÉLIORER LES PARAMÈTRES DE QUALITÉ PHYSIQUE D'ENGRAIS

(30) Priority: 17.01.2019 US 201962793582 P
(43) Date of publication of application: 24.11.2021
(73) Proprietor: The Mosaic Company, Tampa, FL 33602 (US)
(72) Inventor: MCLAUGHLIN, Michael, Plymouth, MN 55441 (US); DEGRYSE, Jozefien, Plymouth, MN 55441 (US); BAIRD, Roslyn, Plymouth, MN 55441 (US); DA SILVA, Rodrigo Coqui, Plymouth, MN 55441 (US); LIGHT, Jerri, Plymouth, MN 55441 (US)
(74) Representative: Barker Brettell LLP
(86) International application number: PCT/US2020/014040
(87) International publication number: WO 2020/150579

(56) References cited:
- EP-A1- 1 194 220
- WO-A1-2011/037469
- WO-A1-2016/130695
- WO-A1-2016/168801
- WO-A1-2018/100063
- CN-A- 106 831 230
- JP-A- 2002 012 488
- JP-A- 2003 176 194
- JP-A- 2003 176 194
- JP-A- 2006 327 841
- JP-B2- 3 483 775
- US-A1- 2016 340 266
- US-B2- 6 558 445

## Description

### TECHNOLOGICAL FIELD

Embodiments of the present disclosure relate to a hydrophobic or super-hydrophobic coating for reducing agglomeration (caking), degradation (breakage), and dust generation of granulated fertilizers during storage, transportation, and application. Specifically, the present disclosure describes a rough coating or surface treatment with a low surface energy compound that minimizes the effect of humidity and temperature cycling of the fertilizer for the purpose of reducing agglomeration, degradation, and dust. In embodiments, the coating can be added in one step to the fertilizers, and may also contain one or more micronutrients and/or secondary nutrients, and results in free-flowing properties.

### BACKGROUND

Many agricultural fertilizers are produced by granulation followed by drying and cooling before being stored for extended periods of time prior to soil application. An inherent problem during this time of conventional storage is the high propensity for a significant portion of the fertilizer to form lumps and agglomerates. The formation of hard lumps and agglomerates are generally the consequence of cyclical humidity changes with changing day to night temperatures. During increasing humidity, moisture condenses out of the air and/or moisture within granules migrates out, and the fertilizer begins to dissolve. When humidity drops and temperature cools, crystal bridges form during the process of re-crystallization, forming salt bridges that lock granules together. These lumps and agglomerates are produced in most fertilizer storage facilities.

Fertilizer which has agglomerated is more likely to produce dust when being packaged or transported due to the dislodgement of these crystals. This makes the fertilizer significantly more difficult to handle and distribute on land as the dust is prone to becoming airborne and its application is difficult to control, ultimately causing uneven nutrient distribution and potential health and safety issues for users. Where lumps of fertilizer are hard and remain unaffected by transportation, these can cause blockages in spreading equipment also resulting in uneven nutrient distribution and equipment wear.

The critical relative humidity, or CRH, at which most fertilizers absorb moisture from the air and suffer physical degradation due to caking is between 60 and 75% relative humidity (at 35°C or 95°F). At this humidity, moisture from the air deposits on the fertilizer and starts the surface dissolution process. When fertilizers with different CRHs are blended together, the CRH for the blend changes and is influenced by the lowest CRH component which can make the blend susceptible to caking under normal storage conditions. This can significantly limit some possible blending partners and their storage abilities.

Coating of granular fertilizers decreases the possibility of degradation. However, many of the hydrophobic coatings used on fertilizers are cost prohibitive for broad acre commercial use and so are only used in more lucrative high-value product sectors such as the turf industry, on golf courses for instance.

Steps have been taken to incorporate hydrophobic coatings onto fertilizers to significantly slow the release of nutrients from the fertilizer, thereby forming controlled- or slow-release fertilizers, such as those described in U.S. Patent No. 7,452,399 entitled "Coating for Fertilizer," U.S. Patent No. 4,857,098 entitled "Sulfur-Coated Fertilizer Granules and Process of Making the Same," and U.S. Appl. 14/351,560 entitled "Encapsulated Nitrogen Fertilizer Composition with Fire-Extinguishing and Fire-Spreading Preventing Option Corresponding Manufacture Process and Application Process".

However, these coatings do not necessarily provide improvements to caking tendency and dust formation. Moreover, these types of coatings are often derived from synthetic polymers, which have not been tested for their long-term effects in the soil. Natural products such as waxes and oils are sometimes applied for their anti-caking abilities, such as those described in U.S. Patent No. 6,355,083B1 entitled "Dust Control Composition for Fertilizer and Method of Treatment of Fertilizer,", but generally they do not provide the benefits with the longevity needed for fertilizer storage. Accordingly, these coatings can result in a significantly shortened shelf life of fertilizer and are often difficult to apply evenly to irregular surfaces.

Inert inorganic particles have been included in some coatings as fillers to try to seal the pores of macro fertilizer granules, slowing water ingress and therefore nutrient release from the product, as discussed, for example, in PCT Application Publication No. WO 2000/076649,. To control and slow down the nutrient release using fillers, amounts as high as 20% by weight of the coating are required, as described in, for example, European Patent Application Publication No. EP 0976699, and often the inclusion of other hydrophobic compounds such as amines are needed to slow dissolution further, as described in French Patent Application Publication No. FR 2155883A2; however, this is not necessary for an anticaking coating.

As such, there is a need for an environmentally responsible and low-cost coating which reduces the caking tendency of water soluble fertilizers, especially those with irregular, angular shaped particles, such as compacted potassium chloride, which makes uniform coating otherwise difficult to achieve.

WO2011/037469A1 discloses a coating composition for a fertilizer comprising at least 50 wt% of a cross-linked lipid; and less than 0.20 wt%, relative to the total weight of the lipid, of a catalyst for cross-linking an unsaturated lipid. The cross-linked lipid has a viscosity at 20°C in the range of 110 and 800 mPa.s.

EP1194220A1 discloses a method for coating a particulate product by using a coating suspension containing an organic phase and solid inorganic particles.

### SUMMARY

The scope of the invention is defined by the appended claims. The present disclosure is generally directed to a hydrophobic or super-hydrophobic coating for fertilizer granules. A hydrophobic coating is one in which the contact angle is 90 degrees or greater when measured from a surface, and a superhydrophobic coating is one in which the contact angle is 140 degrees or greater. Henceforth, for sake of simplicity, "hydrophobic" is used to describe a hydrophobic or super-hydrophobic state.

In a first aspect, the invention is a fertilizer product comprising a plurality of granules coated for moisture control, each of the coated granules comprising a base fertilizer granule and a moisture control coating applied to the base fertilizer granule. The coating includes a hydrophobic material component and a roughening component, wherein the roughening component comprises particulates having a particle size in a range of from about 10 µm to about 150 µm, the roughening component comprises zinc stearate and/or sodium stearate, the hydrophobic material component comprises an oil selected from a group consisting of a mineral white oil, petroleum oil, canola oil, sunflower oil, soy oil, castor oil, linseed oil, olive oil, modified vegetable oils, and combinations thereof, and the hydrophobic material is present in an amount of from about 0.5 to about 2.0 weight percent of the entire fertilizer granule.

The hydrophobic coatings of embodiments include a particulate roughening additive and a low surface energy hydrophobic component. In embodiments of the present disclosure, the one or more additives to the hydrophobic coating result in micron scale surface roughness on the surface of the fertilizer which itself can, but not necessarily will, add hydrophobicity and/or nutrient value to the fertilizer. The hydrophobic coating over the fertilizer granule is used to protect water soluble fertilizer granules from the ingress of moisture.

In a second aspect, the invention is a method of providing a moisture control treatment to fertilizer granules. The method comprises providing a plurality of fertilizer granules; and coating the fertilizer granules with a moisture control treatment material comprising a hydrophobic material and a roughening component. The roughening component comprises particulates having a particle size in a range of from about 10 µm to about 150 µm, wherein the roughening component comprises zinc stearate and/or sodium stearate. The hydrophobic material component comprises an oil selected from a group consisting of a mineral white oil, petroleum oil, canola oil, sunflower oil, soy oil, castor oil, linseed oil, olive oil, modified vegetable oils, and combinations thereof. The hydrophobic material is present in an amount of from about 0.5 to about 2.0 weight percent of the entire fertilizer granule.

In one embodiment of the disclosure, a hydrophobic coating material is in a liquid or molten state. One or more additives are then incorporated into the molten or liquid hydrophobic coating material. The hydrophobic coating material is spray coated or surface rolled onto a base fertilizer granule containing one or more primary nutrients, such as phosphorus-based, nitrogen-based, and/or potassium-based fertilizers (collectively, "NPK fertilizers"). In embodiments, suitable fertilizer granules can comprise, for example, nitrogen-containing fertilizers such as nitrates and ureas, potassium-containing fertilizers such as potashes including muriate of potash (MOP) or sulfate of potash (SOP), phosphorus-containing fertilizers such as phosphate fertilizers including ammonium phosphates like monoammonium phosphate (MAP) or diammonium phosphate (DAP), calcium phosphate fertilizers including single superphosphate (SSP) or triple superphosphate (TSP), potassium phosphates, calcium phosphates, or any combination thereof. The additives in the hydrophobic coating provide a roughness that decreases the contact area between the surface and water droplets encouraging water to run off the surface, and thus preventing or reducing water ingress.

In another embodiment of the disclosure, a fertilizer granule is first coated with a roughening material. According to this embodiment, a particulate roughening additive is first added, such as by conventional coating methods like spray coating, in either one or more continuous or discontinuous coatings around the base fertilizer granule. After the granule has been coated with a particulate roughening compound, a low energy hydrophobic material, e.g., a wax and/or oil, is then added in either one or more continuous or discontinuous coating(s) around the coated base fertilizer granule. Time between application of the roughening compound and coating can vary based on convenience of process design.

Optionally, surface roughness is the result of a physical treatment such as mechanical abrasion of the surface or bypurposefully manufacturing a rough surface during base granule manufacture. One example of this would be controlling the rate of crystallization and degree of annealing of base granules to ensure the required surface roughness..

In another alternative embodiment, the hydrophobic coating with roughening additives, is applied to the base fertilizer granules and patterned, either upon application or subsequent application to the granule. For example, a microrpelication can be formed with the coating is still in a liquid, molten, or otherwise fluid state to create a micro-roughened surface pattern.

### BRIEF DESCRIPTION OF THE DRAWINGS

Subject matter hereof may be more completely understood in consideration of the following detailed description of various embodiments in connection with the accompanying figures, in which:
FIG. 1 is a cross-sectional view of a fertilizer granule containing a super-hydrophobic coating according to one embodiment of the present invention;
FIG. 2 is a cross-sectional view of a fertilizer granule containing a super-hydrophobic coating according to an alternative embodiment of the present invention;
FIG. 3 is a perspective view of roughened fertilizer according to an embodiment of the present invention;
FIG. 4 is a comparison of fertilizer granules depicting the effect of various fertilizer coatings on the caking tendency of fertilizer according to embodiments of the present invention;
FIG. 5 is a chart comparing moisture uptake for fertilizer according to embodiments of the present invention;
FIGS. 6A and 6B are a comparison of moisture repellence and absorption according to embodiments of the present invention;
FIG. 7 is a chart comparing the caking tendency for fertilizer according to embodiments of the present invention;
FIG. 8 is a chart comparing the abrasion resistance of the coated fertilizers according to embodiments of the present invention;
FIG. 9 is a chart comparing product dust of the coated fertilizers according to embodiments of the present invention;
FIG. 10 is a chart comparing the product degradation of the coated fertilizers according to embodiments of the present invention.

While various embodiments are amenable to various modifications and alternative forms, specifics thereof have been shown by way of example in the drawings and will be described in detail. It should be understood, however, that the intention is not to limit the claimed inventions to the particular embodiments described. The scope of the invention is defined by the claims.

### DETAILED DESCRIPTION OF THE DRAWINGS

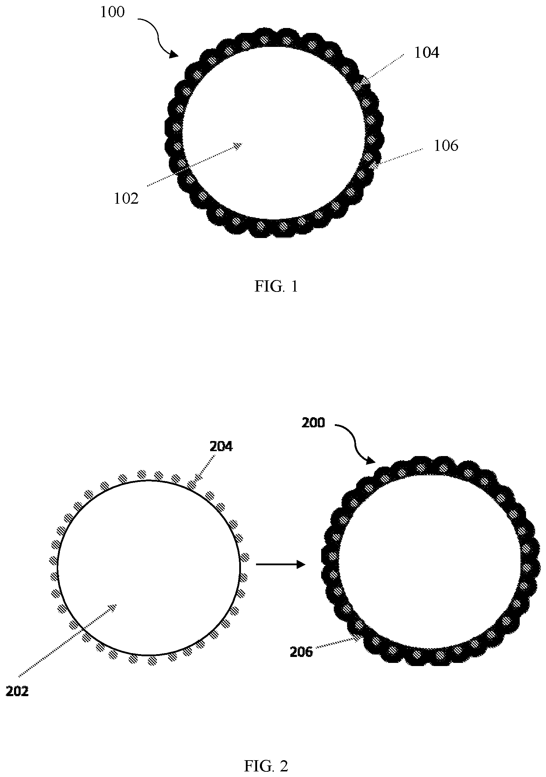

According to an embodiment of the disclosure illustrated in FIG. 1, a hydrophobic coated fertilizer granule 100 can comprise a core fertilizer portion 102 and a hydrophobic coating material 103 containing a particulate roughening additive or component 104 and a low surface energy hydrophobic material 106 coated or otherwise applied to at least a portion of fertilizer 102.

According to embodiments, fertilizer portion 102 can comprise any suitable fertilizer, such as, for example, nitrates, ureas, potashes, phosphate fertilizers such as monoammonium phosphate (MAP), diammonium phosphate (DAP), single superphosphate, triple superphosphate, potassium phosphates, calcium phosphates, or combinations thereof.

According to embodiments, hydrophobic coating material 103 can comprise a dispersion, emulsion, suspension, or mixture of a particulate roughening additive 104 or roughener in a low surface energy material 106. In the invention, this roughening additive 104 comprises sodium stearate, zinc stearate, or a combination thereof. In one embodiment, coating 103 comprises from about 0.01 wt% to about 10 wt%, more specifically from about 0.01 to about 5 wt%, and more specifically from about 0.1 wt% to about 1.0 wt% percent crystalline or amorphous particulate roughening additive based on the total weight of the granule. These additives may or may not be themselves hydrophobic. The roughening additive 104 can be dispersed, emulsified, or otherwise suspending in the hydrophobic material 106.

According to the invention, the hydrophobic material 106 is comprised of a mineral white oil, petroleum oil, canola oil, sunflower oil, soy oil, castor oil, linseed oil, olive oil, or modified vegetable oils or combinations thereof. According to the invention, the hydrophobic material comprises from about 0.5 to about 2.0 weight percent of the entire fertilizer granule. A thin coating ensures hydrophobicity or super-hydrophobicity while also providing the benefit of dust control, without inhibiting release of the fertilizer's nutrients once applied to the soil.

In an embodiment according to FIG. 1, a method of forming a coated fertilizer granule 100 comprises combining a predetermined quantity of a particulate roughener 104 with a predetermined quantity of hydrophobic material 106 to form a super-hydrophobic coating material for coating the formed fertilizer granule. In this embodiment, hydrophobic coating material 106 can be a liquid, solid or molten form and can be sprayed, curtain coated, or any of a number of suitable coating techniques to form a continuous or discontinuous coating onto the formed base fertilizer granules 102 to form a quantity of coated fertilizer granules 100. The granules are then dried or cooled.

In an embodiment according to FIG. 2, the particulate roughener 204 may be applied to the surface of the fertilizer granule 202, prior to application of a low energy material 206 to the fertilizer granule 202. In this embodiment, a particulate roughener 204 can be applied as a liquid, solid or melt and can be sprayed, curtain coated, or applied with any of a number of suitable coating techniques to form a continuous or discontinuous coating onto the formed fertilizer granules 202 to form a quantity of coated fertilizer granules. According to the embodiment, the particulate crystalline- or amorphous-coated granules are then coated with a low energy material 206. The low surface energy material 206 can be a liquid, solid, emulsion or molten form and can be sprayed, curtain coated, or any applied with of a number of suitable coating techniques to form a continuous or discontinuous coating onto the crystalline coated fertilizer granules to form a quantity of coated fertilizer granules 200. The granules are then dried or cooled.

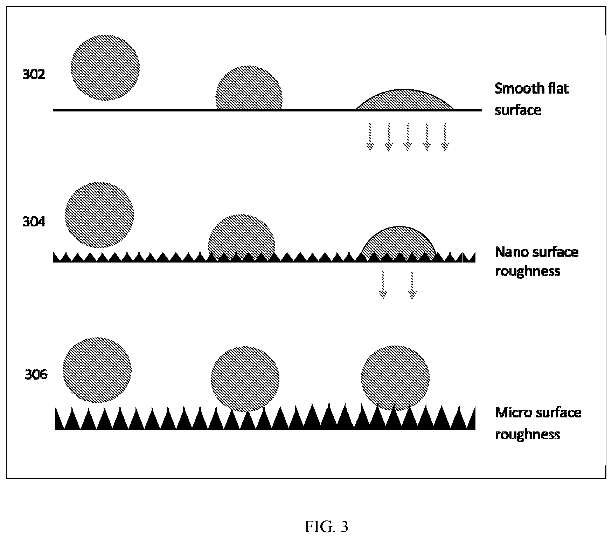

According to an embodiment of the disclosure as depicted in FIGS. 1 and 2, crystalline or amorphous particulate additives produce a micron-scale roughness on the surface of the fertilizer104, 204. In this embodiment roughening of the fertilizer granule can be created by using a wide range of the crystalline or amorphous particulate additives previously described. The roughening material has a size of about 10 µm to about 150 µm. According to embodiments of the disclosure illustrated in FIG. 3, micron scale surface roughness ensures that the surface areas shared by any deposited moisture droplets and the fertilizer granule 306 is minimal compared with no coating 302. The roughness ensures that water droplets remain spherical such that air trapped between the fertilizer 306 and the water droplet will not allow penetration of water into the fertilizer granule. These coatings can also be applied to granules that are heated higher than ambient temperatures to assist the surface wetting of the hydrophobic low energy coating and optimize coating homogeneity.

In embodiments, the particulate roughener compound and low energy hydrophobic additives produce a roughness that increase the hydrophobicity of the coating with minimal effect to the flowability, sprayability, or coatability of the coating. In the most preferred embodiments, the coating should be sufficiently degradable once applied to soil such that the fertilizer nutrients are readily released to the soil.

The following examples discuss particular embodiments of the invention. The equipment used in preparation of each of the examples was a SPEX Mixer Mill 8000M with shock mounted electric motor. In some examples, the mixer mill operated at an oscillating movement of 5.9 cm back and forth, and 2.5 cm side to side at 1060 cycles/min.

Example materials were prepared in batch mode by first charging vials with granules of uncoated MOP, followed by the addition of the appropriate particulate roughener materials, mixing for one minute, then heating together with the low surface energy material and mixing further whilst naturally cooling to ambient temperature.

### Comparative Example 1: MOP, MOP + Wax, and MOP + Wax & particulate roughener

Caking of uncoated MOP was compared to MOP with a wax coating and MOP with a wax and roughener coat. The test conditions were 4 g samples subjected to 35°C (95°F) with 1 kg weight applied at 80% relative humidity for 7 days.

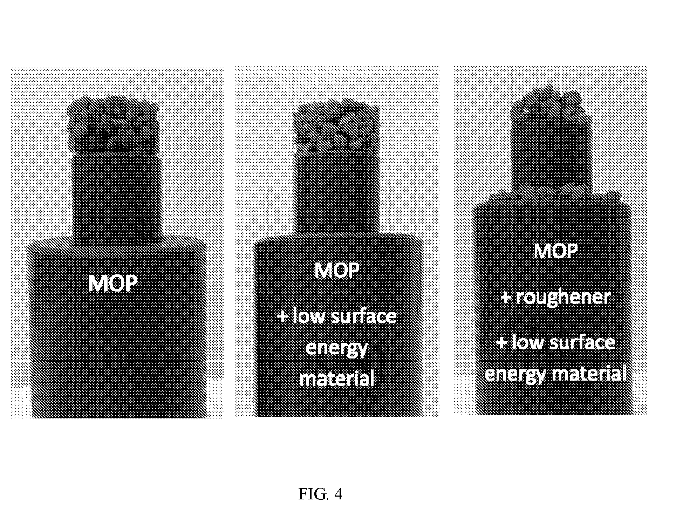

The caking tendency of MOP is relatively high due to the particle size distribution and angular shape of the product. In bulk storage, the caking forms as a crust on MOP stockpiles as the humidity naturally cycles. As illustrated in FIG. 4, MOP coated with finely ground phosphate rock and candelilla wax resulted in significantly less caking as compared to MOP with no surface treatment and MOP with wax only.

### Comparative Example 2: Moisture uptake for MOP with wax and roughener

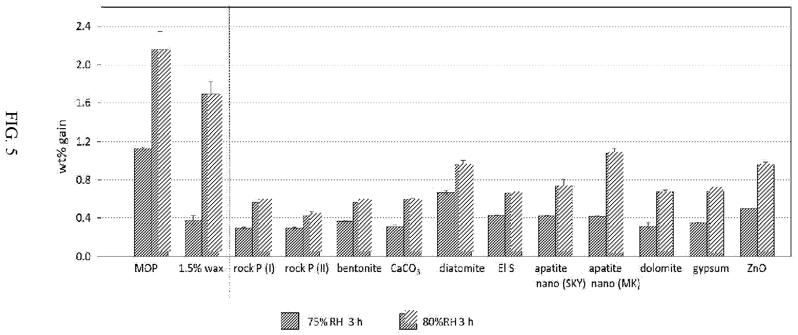

The moisture uptake (weight gain %) at 75% and 80% relative humidities for coated fertilizers with 1.5% candelilla wax and a range of rougheners (FIG. 5) was compared. Rougheners used in this example included phosphate rock, bentonite clay, calcium carbonate (CaCO₃), diatomite, elemental sulfur (El S), apatite nanoparticles (Ca₅(PO₄)₃(F,Cl,OH)) from SKY Spring Nanoparticles Inc, apatite nanoparticles from MK Nano, dolomite (CaCO₃.MgCO₃), gypsum (CaSO₄.2H₂O), and zinc oxide (ZnO). The rougheners were added at rates between 0.1% (elemental S) and 2.4% (dolomite). The moisture uptake was assessed after 3 h exposure at 75 and 80% relative humidity (25°C).

As shown in the graph in FIG. 5, at 80% RH, the coated fertilizer composition using candelilla wax and rock phosphate resulted in the lowest moisture uptake.

### Example 3: Caking tendency of MOP, MOP + ZnO in wax emulsions and Zn stearate roughener with candelilla wax

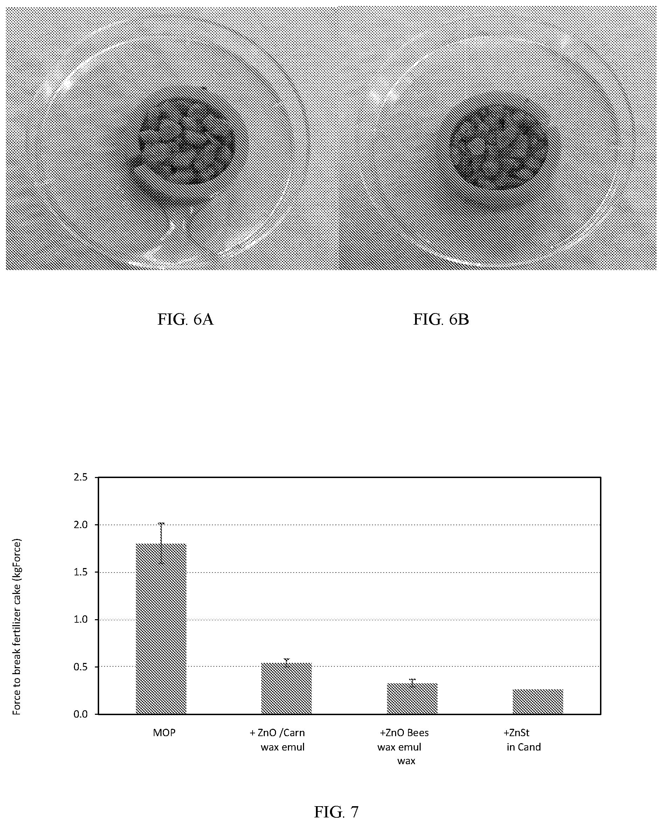

In this example, MOP particles were coated with either wax emulsion coatings applied at a rate of 1.5%wt on the fertilizer with 0.5% wt Zn from ZnO, or a Zn stearate/candelilla coating. Referring to FIGs. 6A and 6B, after 15 days at 80% RH, moisture is repelled from the coated fertilizer composition (see FIG. 6A), but is absorbed by the MOP uncoated particles (see FIG. 6B).The force required to break ~ 3 g samples of caked fertilizer after being subjected to 80% RH at 22°C for 30 d, followed by drying overnight at 40°C and equilibrated to ambient temperature is shown in FIG. 7. As shown, the rougheners of ZnO and Zn stearate in either wax emulsion or melts both significantly reduced the caking tendency of uncoated MOP.

### Comparative Example 4: Abrasion resistance over time for MOP and MOP coated with ZnO and wax emulsions containing varying ratios and wax sources.

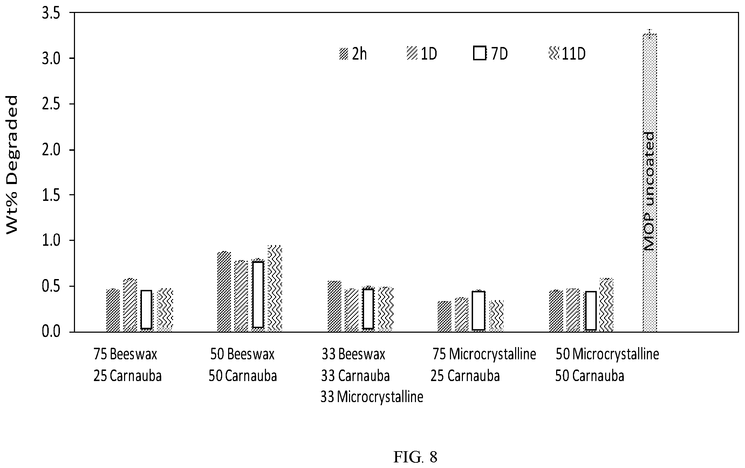

The percent degradation was calculated as the wt% of particles <250 micron remaining after a 10 g sample (+1-3.35mm) was subjected to 30 s in a Spex-mixer/Mill (8000M) replicated in triplicate. Compared with the uncoated sample the % degraded was reduced by ~10 times for these coatings, as shown in FIG. 8.

### Example 5: Product degradation and dust formation

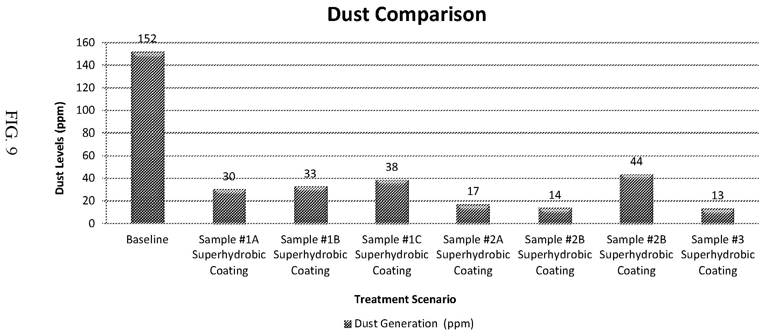

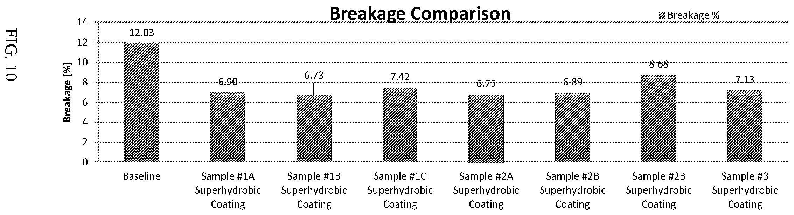

Referring to FIGs. 9 and 10, the product degradation and dust formation was compared for samples with a moisture control coating as described herein compared to uncoated MOP. In the figures, Samples #1A-C and #2-C were coated with a roughener of sodium stearate at an amount of 2 lb of stearate per ton of fertilizer granules, and with a hydrophobic coating formed of VM160 petroleum oil with 5% amine at an amount of 3 lb of coating per ton of granules. Sample #3 was coated with the same roughener and hydrophobic coating formulas, but the roughener was increased to 3.5 lb/ton. As seen in the graphs, the dust generation and breakage percentage of the coated samples were significantly reduced compared to the uncoated baseline sample.

## Claims

1. A fertilizer product comprising a plurality of granules coated for moisture control, each of the coated granules comprising:
a base fertilizer granule; and
a moisture control coating applied to the base fertilizer granule, the coating including a hydrophobic material component and a roughening component,
wherein the roughening component comprises particulates having a particle size in a range of from about 10 µm to about 150 µm,
wherein the roughening component comprises zinc stearate and/or sodium stearate,
wherein the hydrophobic material component comprises an oil selected from a group consisting of a mineral white oil, petroleum oil, canola oil, sunflower oil, soy oil, castor oil, linseed oil, olive oil, modified vegetable oils, and combinations thereof, and
wherein the hydrophobic material is present in an amount of from about 0.5 to about 2.0 weight percent of the entire fertilizer granule.

2. A method of providing a moisture control treatment to fertilizer granules, the method comprising:
providing a plurality of fertilizer granules; and
coating the fertilizer granules with a moisture control treatment material comprising a hydrophobic material and a roughening component,
wherein the roughening component comprises particulates having a particle size in a range of from about 10 µm to about 150 µm,
wherein the roughening component comprises zinc stearate and/or sodium stearate,
wherein the hydrophobic material component comprises an oil selected from a group consisting of a mineral white oil, petroleum oil, canola oil, sunflower oil, soy oil, castor oil, linseed oil, olive oil, modified vegetable oils, and combinations thereof, and
wherein the hydrophobic material is present in an amount of from about 0.5 to about 2.0 weight percent of the entire fertilizer granule.

3. The method of claim 2, wherein coating the fertilizer granules comprises:
coating the fertilizer granules with the roughening component; and
subsequently coating the fertilizer granules with the roughening component applied thereto with the hydrophobic material.

4. The method of claim 2, wherein coating the fertilizer granules comprises:
combining the roughening component and the hydrophobic material; and
subsequently coating the fertilizer granule with the combined roughening component and hydrophobic material.

5. The method of any of claims 2-4 or the fertilizer product of claim 1, wherein the roughening component is present in an amount of:
(i) from about 0.01 wt% to about 10 wt% based on a total weight of the granule, or
(ii) from about 0.1 wt% to about 1.0 wt% percent of the total weight of the granule.

6. The method of any of claims 2-5 or the fertilizer product of claim **1,** or claim 5, wherein the base fertilizer granule is selected from the group consisting of nitrates, ureas, muriate of potash, sulfate of potash, monoammonium phosphate (MAP), diammonium phosphate (DAP), single superphosphate, triple superphosphate, potassium phosphates, calcium phosphates, and combinations thereof.

7. The method of claim 2 or the fertilizer product of claim 1, wherein the moisture control coating comprises petroleum oil with amine as the hydrophobic material.

## Patentansprüche

1. Düngemittelprodukt, umfassend eine Vielzahl von zur Feuchtigkeitsregulierung beschichteten Granulaten, wobei jedes der beschichteten Granulate Folgendes umfasst:
ein Basisdüngemittelgranulat; und
eine Feuchtigkeitsregulierungsbeschichtung, die auf das Basisdüngemittelgranulat aufgebracht ist, wobei die Beschichtung eine hydrophobe Materialkomponente und eine Aufraukomponente beinhaltet,
wobei die Aufraukomponente Partikel umfasst, die eine Partikelgröße in einem Bereich von etwa 10 µm bis etwa 150 µm aufweisen,
wobei die Aufraukomponente Zinkstearat und/oder Natriumstearat umfasst,
wobei die hydrophobe Materialkomponente ein Öl umfasst, das aus einer Gruppe ausgewählt ist, die aus einem Weißöl, Mineralöl, Rapsöl, Sonnenblumenöl, Sojaöl, Rizinusöl, Leinöl, Olivenöl, modifizierten Pflanzenölen und Kombinationen daraus besteht, und
wobei das hydrophobe Material in einer Menge von etwa 0,5 bis etwa 2,0 Gewichtsprozent des gesamten Düngemittelgranulats vorliegt.

2. Verfahren zum Bereitstellen einer Feuchtigkeitsregulierungsbehandlung an Düngemittelgranulaten, wobei das Verfahren Folgendes umfasst:
Bereitstellen einer Vielzahl von Düngemittelgranulaten; und
Beschichten der Düngemittelgranulate mit einem Feuchtigkeitsregulierungsbehandlungsmaterial, das ein hydrophobes Material und eine Aufraukomponente umfasst,
wobei die Aufraukomponente Partikel umfasst, die eine Partikelgröße in einem Bereich von etwa 10 µm bis etwa 150 µm aufweisen,
wobei die Aufraukomponente Zinkstearat und/oder Natriumstearat umfasst,
wobei die hydrophobe Materialkomponente ein Öl umfasst, das aus einer Gruppe ausgewählt ist, die aus einem Weißöl, Mineralöl, Rapsöl, Sonnenblumenöl, Sojaöl, Rizinusöl, Leinöl, Olivenöl, modifizierten Pflanzenölen und Kombinationen daraus besteht, und
wobei das hydrophobe Material in einer Menge von etwa 0,5 bis etwa 2,0 Gewichtsprozent des gesamten Düngemittelgranulats vorliegt.

3. Verfahren nach Anspruch 2, wobei das Beschichten der Düngemittelgranulate Folgendes umfasst:
Beschichten der Düngemittelgranulate mit der Aufraukomponente; und
anschließendes Beschichten der Düngemittelgranulate mit der darauf aufgebrachten Aufraukomponente mit dem hydrophoben Material.

4. Verfahren nach Anspruch 2, wobei das Beschichten der Düngemittelgranulate Folgendes umfasst:
Kombinieren der Aufraukomponente und des hydrophoben Materials; und
anschließendes Beschichten des Düngemittelgranulats mit der Kombination aus Aufraukomponente und hydrophobem Material.

5. Verfahren nach einem der Ansprüche 2-4 oder Düngemittelprodukt nach Anspruch 1, wobei die Aufraukomponente in einer folgenden Menge vorliegt:
(i) von etwa 0,01 Gew.-% bis etwa 10 Gew.-% basierend auf einem Gesamtgewicht des Granulats oder
(ii) von etwa 0,1 Gew.-% bis etwa 1,0 Gew.-% des Gesamtgewichts des Granulats.

6. Verfahren nach einem der Ansprüche 2-5 oder Düngemittelprodukt nach Anspruch 1 oder Anspruch 5, wobei das Basisdüngemittelgranulat aus der Gruppe ausgewählt ist, die aus Nitraten, Harnstoffen, Kaliumchlorid, Kaliumsulfat, Monoammoniumphosphat (MAP), Diammoniumphosphat (DAP), Einfachsuperphosphat, Tripelsuperphosphat, Kaliumphosphaten, Calciumphosphaten und Kombinationen daraus besteht.

7. Verfahren nach Anspruch 2 oder Düngemittelprodukt nach Anspruch 1, wobei die Feuchtigkeitsregulierungsbeschichtung Mineralöl mit Amin als das hydrophobe Material umfasst.

## Revendications

1. Produit d'engrais comprenant une pluralité de granulés enrobés pour le contrôle d'humidité, chacun des granulés enrobés comprenant :
un granulé d'engrais de base ; et
un revêtement de contrôle d'humidité appliqué au granulé d'engrais de base, le revêtement incluant un composant de matériau hydrophobe et un composant de rugosité,
dans lequel le composant de rugosité comprend des particules ayant une taille de particule dans une plage allant d'environ 10 µm à environ 150 µm,
dans lequel le composant de rugosité comprend du stéarate de zinc et/ou du stéarate de sodium,
dans lequel le composant de matériau hydrophobe comprend une huile sélectionnée dans un groupe constitué par une huile blanche minérale, une huile de pétrole, une huile de canola, une huile de tournesol, une huile de soja, une huile de ricin, une huile de lin, une huile d'olive, des huiles végétales modifiées, et des combinaisons de celles-ci, et
dans lequel le matériau hydrophobe est présent en une quantité allant d'environ 0,5 à environ 2,0 pour cent en poids de l'intégralité du granulé d'engrais.

2. Procédé de fourniture d'un traitement de contrôle d'humidité à des granulés d'engrais, le procédé comprenant :
la fourniture d'une pluralité de granulés d'engrais ; et
l'enrobage des granulés d'engrais avec un matériau de traitement de contrôle d'humidité comprenant un matériau hydrophobe et un composant de rugosité,
dans lequel le composant de rugosité comprend des particules ayant une taille de particule dans une plage allant d'environ 10 µm à environ 150 µm,
dans lequel le composant de rugosité comprend du stéarate de zinc et/ou du stéarate de sodium,
dans lequel le composant de matériau hydrophobe comprend une huile sélectionnée dans un groupe constitué par une huile blanche minérale, une huile de pétrole, une huile de canola, une huile de tournesol, une huile de soja, une huile de ricin, une huile de lin, une huile d'olive, des huiles végétales modifiées, et des combinaisons de celles-ci, et
dans lequel le matériau hydrophobe est présent en une quantité allant d'environ 0,5 à environ 2,0 pour cent en poids de l'intégralité du granulé d'engrais.

3. Procédé selon la revendication 2, dans lequel l'enrobage des granulés d'engrais comprend :
l'enrobage des granulés d'engrais avec le composant de rugosité ; et
l'enrobage ultérieur des granulés d'engrais avec le composant de rugosité appliqué à ceux-ci avec le matériau hydrophobe.

4. Procédé selon la revendication 2, dans lequel l'enrobage des granulés d'engrais comprend :
la combinaison du composant de rugosité et du matériau hydrophobe ; et
l'enrobage ultérieur du granulé d'engrais avec le composant de rugosité et le matériau hydrophobe combinés.

5. Procédé selon l'une quelconque des revendications 2 à 4 ou produit d'engrais selon la revendication 1, dans lequel le composant de rugosité est présent en une quantité :
(i) d'environ 0,01 % en poids à environ 10 % en poids sur la base d'un poids total du granulé, ou
(ii) d'environ 0,1 % en poids à environ 1,0 % en poids du poids total du granulé.

6. Procédé selon l'une quelconque des revendications 2 à 5 ou produit d'engrais selon la revendication 1, ou la revendication 5, dans lequel le granulé d'engrais de base est sélectionné dans le groupe constitué par des nitrates, des urées, du chlorure de potassium, du sulfate de potassium, du phosphate monoammonique (MAP), du phosphate diammonique (DAP), du superphosphate simple, du superphosphate triple, des phosphates de potassium, des phosphates de calcium, et des combinaisons de ceux-ci.

7. Procédé selon la revendication 2 ou produit d'engrais selon la revendication 1, dans lequel le revêtement de contrôle d'humidité comprend une huile de pétrole avec une amine en tant que matériau hydrophobe.
